# EUROPÄISCHE PATENTSCHRIFT

(11) **EP 0 494 713 B1**
(45) Veröffentlichungstag und Bekanntmachung des Hinweises auf die Patenterteilung: **26.06.1996**
(21) Anmeldenummer: 92200009.6
(22) Anmeldetag: 03.01.1992
(51) Int. Cl.: H02M 7/10, H02M 3/07

(54) **Schaltungsanordnung zur Erzeugung einer höheren Gleichspannung**
Circuit arrangement for generating a higher DC voltage
Disposition de circuit pour la génération d'une tension continue plus élevée

(30) Priorität: 07.01.1991 DE 4100209
(43) Veröffentlichungstag der Anmeldung: 15.07.1992
(73) Patentinhaber: Philips Patentverwaltung GmbH, 22335 Hamburg (DE); Philips Electronics N.V., 5621 BA Eindhoven (NL)
(72) Erfinder: Sickert, Klaus, W-2081 Bönningstedt (DE); Axer, Klaus, Dr., W-2400 Lübeck 1 (DE)
(74) Vertreter: Poddig, Dieter, Dipl.-Ing.

(56) Entgegenhaltungen:
- EP-A- 0 023 683
- GB-A- 1 155 763
- IEEE JOURNAL OF SOLID STATE CIRCUITS Bd. 11, Nr. 3, Juni 1976, NEW YORK Seiten 374 - 378; DICKSON: 'On-chip high-voltage generation in MNOS integrated circuits using an improved voltage multiplier technique'

## Beschreibung

Die Erfindung betrifft eine Schaltungsanordnung zur Erzeugung einer bezüglich einer Bezugsspannung höheren Gleichspannung als eine Speisespannung, die erzeugt ist durch Gleichrichtung einer Wechselspannung aus einer Wechselspannungsquelle mit zwei Polen, insbesondere für kontaktlose Chipkarten, die nichtflüchtige Schreib-Lese-Speicher wie EEPROMs enthalten und ihre Energieversorgung über wenigstens eine Spule erhalten.

Eine Schaltungsanordnung zum Erzeugen einer höheren Gleichspannung mit einer Kette aus gleichsinnig in Reihe geschalteten Diodenanordnungen, deren eines Ende die höhere Gleichspannung abgibt, wobei die Verbindungspunkte der Diodenanordnungen mit je einem Kondensator verbunden sind, dessen andere Anschlüsse abwechselnd mit einem anderen von zwei Impulsausgängen eines Impulsgenerators verbunden sind an denen nicht überlappende Impulse erzeugt werden, ist bekannt aus der Zeitschrift "IEEE Journal of Solid-State Circuits". Vol. SC-11, No. 3, Juni 1976, S. 374 bis 378. Die damit erzeugte höhere Spannung dient zum Betreiben von bestimmten Schaltungselementen bzw. Schaltungsteilen, beispielsweise den genannten EEPROMs, im Rahmen einer digitalen Schaltungsanordnung. Bei der bekannten Schaltungsanordnung enthält der Impulsgenerator einen Oszillator, der über zwei in Reihe geschaltete Inverter die beiden Impulsausgänge des Impulsgenerators ansteuert. Durch entsprechende Dimensionierung muß dafür gesorgt werden, daß die Impulse an beiden Impulsausgängen sich nicht überlappen, und die Amplitude der daran erzeugten Impulse ist zwangsläufig kleiner als die Speisespannung.

In manchen Fällen werden digitale Schaltungsanordnungen von einer relativ hochohmigen Wechselspannung über einen Brückengleichrichter gespeist. Ein Beispiel für eine solche Anordnung ist die genannte kontaktlose Chipkarte, bei der eine integrierte Halbleiterschaltung in einen scheckkartenähnlichen Datenträger eingesetzt ist, wobei der Datenaustausch und die Speisung der Schaltung nur über eine einzige Spule mittels einer darin induzierten Wechselspannung höherer Frequenz erfolgt. Dabei entstehen einige Probleme, die besondere Maßnahmen erfordern. Durch die Bauart und den Betrieb einer solchen Chipkarte zusammen mit einem entsprechenden Lesegerät und einer darin enthaltenen Spule ist die Kopplung zwischen beiden Spulen nicht sehr fest, so daß die Belastung der aus der Wechselspannung erzeugten gleichgerichteten Speisespannung nur gering sein darf. Ferner ist durch die begrenzte räumliche Ausdehnung der Spule die Erzeugung von höheren Speisespannungen nur schwierig bzw. nahezu unmöglich. Zudem ist die Größe der Wechselspannung und damit der daraus gewonnenen Gleichspannung nicht sehr konstant und muß durch besondere Maßnahmen stabilisiert werden. Die gewonnene Gleichspannung ist außerdem um die Durchlaßspannungen des Gleichrichters kleiner als die Amplitude der Wechselspannung. Wenn in einer solchen Anordnung also die eingangs genannte bekannte Schaltungsanordnung verwendet werden soll, ist eine größere Anzahl von Stufen erforderlich, um den notwendigen Wert der höheren Gleichspannung zuverlässig zu erreichen.

Es sind bereits Gleichrichterschaltungen bekannt, bei denen zumindest ein Pol der erzeugten Gleichspannung über Schalter direkt mit den beiden Polen der Wechselspannung verbunden sind, wobei die Schalter von dem jeweils anderen Pol der Wechselspannung gesteuert werden. Dadurch tritt wenigstens für diesen Pol der Gleichspannung nahezu kein Spannungsabfall gegenüber der Amplitude der Wechselspannung auf. Wenn die erzeugte Gleichspannung wie üblich durch einen Kondensator geglättet werden soll, läßt sich ein Spannungsabfall für den anderen Pol der Gleichspannung praktisch nicht vermeiden, so daß die Gleichspannung immer kleiner ist als die Amplitude der Wechselspannung.

Aufgabe der Erfindung ist es, eine Schaltungsanordnung der eingangs genannten Art anzugeben, die im Zusammenhang mit einer durch eine gleichgerichtete Wechselspannung gespeiste Anordnung möglichst wirksam arbeitet.

Diese Aufgabe wird erfindungsgemäß dadurch gelöst, daß jeder Pol der Wechselspannungsquelle über einen ersten Schalter direkt mit der Bezugsspannung verbunden ist, wobei jeder erste Schalter von der Spannung am jeweils anderen Pol der Wechselspannung angesteuert ist, und daß bei der Kette aus gleichsinnig in Reihe geschalteten Diodenanordnungen, deren eines Ende die hiihere Gleichspannung abgibt und bei der die Verbindungspunkte der Diodenanordnungen mit je einem Kondensator verbunden sind, die anderen Anschlüsse der Kondensatoren abwechselnd mit einem anderen Pol der Wechselspannungsquelle gekoppelt sind.

Es wird also kein Oszillator als Impulsgenerator verwendet, sondern die Wechselspannung selbst wird unmittelbar ausgenutzt zur Erzeugung der nicht überlappenden Impulse an den Anschlüssen der Kondensatoren. Ferner wird dadurch, daß die Anschlüsse der Kondensatoren direkt mit dem betreffenden Pol der Wechselspannung gekoppelt sind, ein zusätzlicher Spannungsabfall in dem für die Gleichspannungsspeisung der übrigen Schaltung verwendeten Gleichrichter vermieden, so daß als Amplitude der Impulse zum Ansteuern der einen Anschlüsse der Kondensatoren praktisch die volle Amplitude der Wechselspannung zur Verfügung steht. Dadurch werden weniger Stufen in der Spannungsvervielfacherkette aus Dioden und Kondensatoren benötigt, wodurch der Wirkungsgrad steigt und der Innenwiderstand der Anordnung kleiner wird. Wenn als Gleichrichter für die Gleichspannungsspeisung ein Brückengleichrichter verwendet wird, können die ersten Schalter wie an sich bekannt einen Teil des Brückengleichrichters darstellen.

Solche mittels einer relativ hochohmigen Wechselspannurg über einen Gleichrichter gespeisten Anordnungen sind üblicherweise mit Feldeffekttransistoren aufgebaut, und zwar am günstigsten in komplementärer Schaltungstechnik, weil derartige Schaltungen mit einem sehr geringen Leistungsbedarf arbeiten. Für derartige Anordnungen ist eine Ausgestaltung der erfindungsgemäßen Anordnung dadurch gekennzeichnet, daß jeder erste Schalter durch einen ersten selbstsperrenden Feldeffekttransistor des einen Leitfähigkeitstyps gebildet ist, dessen Gate mit dem entsprechenden Pol der Wechselspannungsquelle verbunden ist. Auf diese Weise ergibt sich eine einfache Realisierung der Schalter und insbesondere von deren Ansteuerung, durch die direkte Verbindung der Gates mit den entsprechenden Spannungen gebildet werden kann. Dadurch sind keine weiteren Bauelemente erforderlich, so daß sich ein kompakter Aufbau ergibt.

Häufig ist die höhere Spannung jedoch nicht bei allen Betriebsbedingungen erforderlich. Andererseits erfordert die Erzeugung der höheren Spannung auch bei unbelastetem Ausgang eine gewisse Leistung, die die relativ hochohmige Wechselspannung zusätzlich belastet. Um daher die Belastung zu den Zeiten zu denen keine höhere Spannung erforderlich ist, zu verringern, ist es nach einer weiteren Ausgestaltung der Erfindung zweckmäßig, daß zum Steuern der Erzeugung der höheren Spannung über eine Steuerspannung an einem Steuereingang jeder Pol der Wechselspannungsquelle über einen zugeordneten zweiten Schalter direkt mit den betreffenden Anschlüssen der Kondensatoren verbunden ist, wobei jeder zweite Schalter über einen dritten Schalter durch die Differenz zwischen der Spannung an dem entsprechenden Pol und der Bezugsspannung angesteuert ist und die dritten Schalter durch die Steuerspannung angesteuert sind. Dadurch läßt sich auf einfache Weise der Betrieb des Impulsgenerators abschalten, ohne daß dabei dann moch ein merkbarer Stromverbrauch auftritt. Andererseits wird durch den zweiten Schalter die Impulsamplitude bei eingeschaltetem Impulsgenerator nicht nennenswert verringert.

Wenn diese Ausgestaltung in einer Anordnung verwendet werden soll, die mit Feldeffekttranistoren aufgebaut ist, ist eine weitere Ausgestaltung der Erfindung dadurch gekennzeichnet, daß jeder erste und jeder dritte Schalter ein erster bzw. ein dritter Feldeffekttransistor des einen Leitfähigkeitstyps und jeder zweite Schalter ein zweiter Feldeffekttransistor des anderen Leitfähigkeitstyps ist, wobei das Gate jedes ersten Feldeffekttransistors mit dem entsprechenden Pol der Wechselspannungsquelle verbunden ist und das Gate jedes zweiten Feldeffekttransistors über den dritten Feldeffekttransistor mit der Bezugsspannung und über einen vierten Feldeffekttransistor des anderen Leitfähigkeitstyps mit dem gleichen Pol der Wechselspannungsquelle wie der zweite Feldeffekttransistor verbunden ist, wobei das Gate jedes dritten Feldeffekttransistors mit dem Steuereingang und das Gate jedes vierten Feldeffekttransistors mit einem Ausgang für die zugehörigen Anschlüsse der Kondensatoren verbunden ist. Auf diese Weise werden die zum Abschalten des Impulsgenerators erforderlichen Schalter sehr einfach angesteuert, ohne daß zusätzliche Bauelemente erforderlich sind. Um dabei jedoch bei abgeschaltetem Impulsgenerator und damit bei gesperrten dritten Feldeffekttransistoren zu verhindern, daß die dann praktisch offenen, d.h. nicht niederohmig abgeschlossenen Gates der zweiten Feldeffekttransistoren diese durch parasitäre Ströme oder Kapazitäten leitend machen, werden diese Gates durch den vierten Feldeffekttransistor niederohmig so abgeschlossen, daß die zweiten Feldeffekttransistoren mit Sicherheit gesperrt sind. Bei eingeschaltetem Impulsgenerator werden diese vierten Feldeffekttransistoren automatisch dadurch gesperrt, daß die zweiten Feldeffekttransistoren leitend sind.

Die Sperrung der zweiten Feldeffekttransistoren ist bei absgeschaltetem Impulsgenerator jedoch nur dann sicher gewährleistet, wenn die Impulsausgänge des Impulsgenerators tatsächlich praktisch auf der Bezugsspannung bleiben, da sonst nicht gewährleistet ist, daß der vierte Feldeffekttransistor leitend bleibt. Um auch hier eine erhöhte Sicherheit gegen parasitäre Ströme und Kapazitäten zu schaffen, ist es nach einer weiteren Ausgestaltung der Erfindung zweckmäßig, daß parallel zum ersten Feldeffekttransistor ein fünfter Feldeffekttransistor geschaltet ist, dessen Gate über einen Inverter mit dem Steuereingang verbunden ist. Damit ist sowohl bei eingeschaltetem als auch bei abgeschaltetem Impulsgenerator jeweils ein leitender bzw. gesperrter Zustand der Feldeffekttransistoren gesichert.

Ausführungsbeispiele der Erfindung werden nachstehend anhand der Zeichnung näher erläutert. Es zeigen
- Fig. 1: die Grundschaltung des Impulsgenerators mit dem Anfang der Kette aus Diodenanordnungen und Kondensatoren,
- Fig. 2: eine Erweiterung des Impulsgenerators mit Abschaltmöglichkeit.

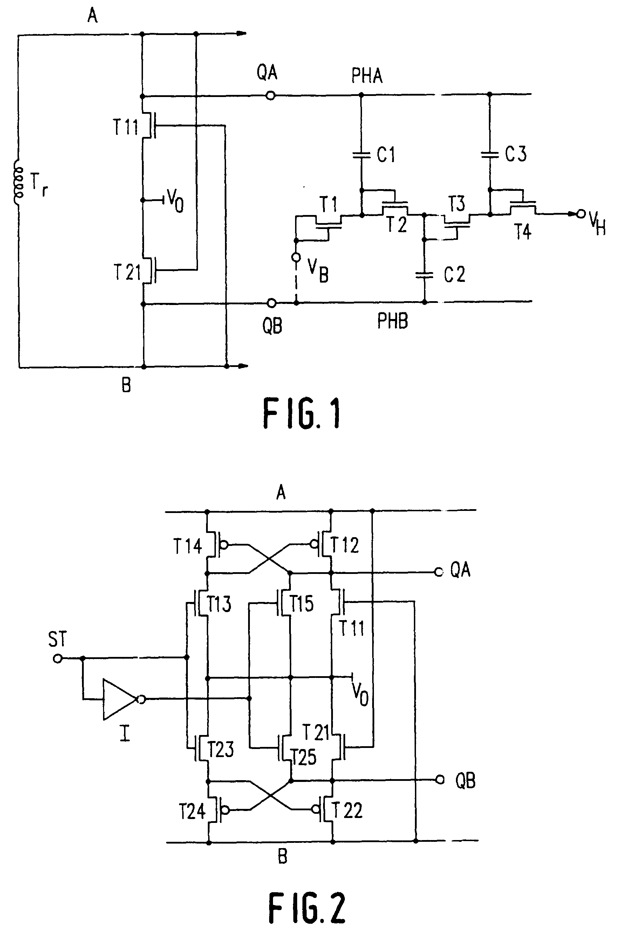

In Fig. 1 ist ein Teil der bekannten Spannungsvervielfacherkette aus den Kondensatoren C1 bis C3 und den Transistoren T1 bis T4 dargestellt. Die Transistoren T1 bis T4 sind selbstsperrende MOS-Transistoren, deren Gate jeweils mit einer Hauptstrombahn verbunden ist. Dadurch wirken diese Transistoren wie Dioden mit einer Schwellspannung, die durch die Schwellspannung der Transistoren gegeben ist und die durch einen entsprechenden Herstellungsprozed niedrig gemacht werden kann. Dabei wird angenommen, daß es sich um n-leitende Transistoren handelt und eine positive höhere Spannung erzeugt werden soll. Die Transistoren T1 bis T4 sind bezüglich ihrer Hauptstrombahn in Reihe geschaltet, wobei das freie Ende des Transistors T1 mit irgendeiner Bezugsspannung Vg verbunden ist, die nicht notwendigerweise eine Gleichspannung sein muß, sondern im dargestellten Beispiel durch die Impulse auf der Leitung PHB gebildet wird. An diese ist auch der nicht mit der Transistorkette verbundene Anschluß des Kondensators C2 angeschlossen, während die entsprechenden Anschlüsse der Kondensatoren C1 und C3 mit der Impulsleitung PHA verbunden sind. Die Impuls leitungen PHA und PHB führen Spannungsimpulse, die von nahezu dem Pegel der Bezugsspannung V_{O} bis zu einer Maximalamplitude gehen, die möglichst hoch sein soll, da davon der Maximalwert der höheren Spannung V_{H} am Ausgang des Transistors T4, abgesehen von der Anzahl der Stufen, bestimmt wird. Die Anzahl der Stufen sollte möglichst gering sein, da dann der Innenwiderstand der Spannungsquelle für die Spannung V_{H} am niedrigsten und der Wirkungsgrad am besten ist. An dem Ausgang des Transistors T4 können sich noch weitere Stufen anschließen, wenn eine höhere Ausgangsspannung gefordert wird.

Die Impuls leitungen PHA und PHB werden von den Impulsausgängen QA und QB eines Impulsgenerators gespeist, der im wesentlichen eine direkte Verbindung zwischen dem Impulsausgang QA und dem Pol A der Wechselspannung, die in der Transformatorspule Tr induziert wird, und eine direkte Verbindung zwischen dem Impulsausgang QB und dem Pol B der Wechselspannung enthält. Ferner sind noch zwei Transistoren T11 und T21 zwischen den Impulsausgängen QA bzw. QB und der Bezugsspannung V_{O} vorhanden, bei denen das Gate des Transistors T11 mit dem Pol B und das Gate des Transistors T21 mit dem Pol A der Wechselspannung verbunden ist. Da von einer positiven Speisespannung und somit auch von einer positiven höheren Gleichspannung V_{H} ausgegangen wird, sind die Transistoren T11 und T21 n-leitende selbstsperrende MOS-Transistoren.

Im Betrieb ist, wenn der Pol A positiv gegenüber dem Pol B ist, die Impulsspannung am Impulsausgang QA für eine Halbwelle gleich der Spannung am Pol A, so daß die Impulsamplitude auf der Impulsleitung PHA den maximal möglichen Wert hat. Gleichzeitig wird der Transistor T21 durch seine positive Gate-Spannung leitend, so daß der Impulsausgang QB und damit auch der Pol B praktisch auf dem potential der Bezugsspannung V₀ liegt. Der Transistor T11 ist gesperrt.

Am Ende dieser Halbwelle wird der Transistor T21 wieder nichtleitend, wenn die Spannung am Pol A bzw. am Impulsausgang QA die Schwellwertspannung des Transistors T21 unterschreitet. Mit der nächsten Halbwelle hat der Pol B eine positive Spannung gegenüber dem Pol A, und die entsprechenden Vorgänge laufen für den Transistor T11 bzw. für den Impulsausgang QB ab. Auf diese Weise führen die Impulsleitungen PHA und PHB abwechselnd und nicht überlappend Impulse mit einer Amplitude, die nahezu gleich der Amplitude der Wechselspannung zwischen den Polen A und B ist.

Wie aus dieser Erläuterung zu ersehen ist, ist jeweils der Pol A oder B mit der negativeren Spannung mit der Bezugsspannung V₀ verbunden, so daß die Transistoren T11 und T21 praktisch die Funktion eines Teils einer Brückengleichrichterschaltung für die Erzeugung der Speisegleichspannung einer weiteren, nicht dargestellten Schaltungsanordnung haben, so daß für die Erzeugung der Speisegleichspannung nur noch zwei Diodenanordnungen zwischen den polen der Wechselspannung und der Speisegleichspannung erforderlich sind. Dies gilt jedoch nicht für die Ausführung des Impulsgenerators nach Fig. 2, die eine einfache Möglichkeit, den Betrieb des Impulsgenerators und damit die Erzeugung der höheren Spannung auch schaltbar zu machen, darstellt. Darin sind die Impulsausgänge QA und QB nicht direkt mit den beiden polen A und B verbunden, sondern über Feldeffekttransistoren T12 bzw. T22. Ferner enthält der Impulsgenerator die selbstsperrenden Feldeffekttransistoren T13 bis T15 und T23 bis T25 sowie den Inverter I und den Steuereingang ST. Die Gates der p-leitenden Transistoren T12 und T22 sind mit der Bezugsspannung V₀ über n-leitende Transistoren T14 und T24 verbunden, deren Gates mit dem Steuereingang ST verbunden sind. Ferner sind die Gates der Transistoren T12 und T22 über einen p-leitenden Transistor T14 bzw. T24 mit dem jeweiligen Pol A bzw. B der Wechselspannung verbunden. Die Gates der Transistoren T14 bzw. T24 sind mit dem Impulsausgang QA bzw. QB des Impulsgenerators verbunden, die ferner über einen weiteren n-leitenden Transistor T15 bzw. T25 mit der Bezugsspannung V₀ verbunden sind. Die Gates der Transistoren T15 und T25 sind über einen Inverter I mit dem Steuereingang ST verbunden.

Wenn die Steuerspannung am Steuereingang ST hoch ist, sind die Transistoren T13 und T23 leitend und die Transistoren T15 und T25 gesperrt. Damit ist das Gate des Transistors T12 bzw. T22 mit der Bezugsspannung V₀ verbunden, während das Gate des Transistors T14 bzw. T24 mit dem Pol A bzw. Pol B der Wechselspannung über den Transistor T12 bzw. T22 verbunden ist, sobald letzterer leitend ist, so daß die Transistoren T14 und T24 in diesem Zustand der Steuerspannung am Steuereingang ST praktisch ständig gesperrt sind. Damit hat die Schaltung nach Fig. 2 bei diesem Zustand der Steuerspannung am Steuereingang ST die gleiche Funktion wie die Schaltung nach Fig. 1.

Wenn die Steuerspannung am Steuereingang ST niedrig ist, sind die Transistoren T13 bzw. T23 gesperrt und die Transistoren T15 bzw. T25 leitend. Damit führen beide Impulsausgänge QA und QB praktisch die Bezugsspannung V₀, während die Transistoren T14 bzw. T24 in den beiden Halbwellen der Wechselspannung abwechselnd leitend sind und damit den Transistor T12 bzw. T22 sperren. Damit fließt in diesem Zustand der Steuerspannung am Steuereingang ST praktisch kein Strom von den polen A und B zur Bezugsspannung V₀, so daß dann der Impulsgenerator keine Belastung darstellt.

## Patentansprüche

1. Schaltungsanordnung zur Erzeugung einer bezüglich einer Bezugsspannung höheren Gleichspannung als eine Speisegleichspannung, die erzeugt ist durch Gleichrichtung einer Wechselspannung aus einer Wechsel spannungsquelle (Tᵣ) mit zwei Polen (A, B), mit ersten Schaltern (T11, T21), die jeden Pol (A,B) direkt mit der Bezugsspannung (V₀) verbinden, wobei jeder erste Schalter (T11, T21) von der Spannung am jeweils anderen Pol (B bzw. A) der Wechselspannungsquelle angesteuert ist, und mit einer Kette aus gleichsinnig in Reihe geschalteten Diodenanordnungen (T1 bis T4), deren eines Ende die höhere Gleichspannung abgibt und bei der die Verbindungspunkte der Diodenanordnungen mit je einem Kondensator (C1 bis C3) verbunden sind, deren andere Anschlüsse (PHA, PHB) abwechselnd mit einem anderen Pol (A, B) der Wechselspannungsquelle (Tᵣ) gekoppelt sind.

2. Schaltungsanordnung nach Anspruch 1, dadurch gekennzeichnet,
daß jeder erste Schalter (T11, T21) durch einen ersten selbstsperrenden Feldeffekttransistor des einen Leitfähigkeitstyps gebildet ist, dessen Gate mit dem entsprechenden Pol (A bzw. B) der Wechselspannungsquelle (Tᵣ) verbunden ist.

3. Schaltungsanordnung nach Anspruch 1, dadurch gekennzeichnet,
daß zum Steuern der Erzeugung der höheren Spannung (V_{H}) über eine Steuerspannung an einem Steuereingang (ST) jeder Pol (A, B) der Wechselspannungsquelle (Tᵣ) über einen zugeordneten zweiten Schalter (T12, T22) direkt mit den betreffenden Anschlüssen (PHA, PHB) der Kondensatoren (C1 bis C3) verbunden ist, wobei jeder zweite Schalter (T12, T22) über einen dritten Schalter (T13, T23) durch die Differenz zwischen der Spannung an dem entsprechenden Pol (A, B) und der Bezugsspannung (V₀) angesteuert ist und die dritten Schalter (T13, T23) durch die Steuerspannung angesteuert sind.

4. Schaltungsanordnung nach Anspruch 3, dadurch gekennzeichnet,
daß jeder erste und jeder dritte Schalter (T11, T13, T21, T23) ein erster bzw. ein dritter Feldeffekttransistor des einen Leitfähigkeitstyps und jeder zweite Schalter (T12, T22) ein zweiter Feldeffekttransistor des anderen Leitfähigkeitstyps ist, wobei das Gate jedes ersten Feldeffekttransistors (T11, T21) mit dem entsprechenden Pol (B, A) der Wechselspannungsquelle (Tᵣ) verbunden ist und das Gate jedes zweiten Feldeffekttransistors (T11, T21) über den dritten Feldeffekttransistor (T13, T23) mit der Bezugsspannung (V₀) und über einen vierten Feldeffekttransistor (T14, T24) des anderen Leitfähigkeitstyps mit dem gleichen Pol (A bzw. B) der Wechselspannungsquelle (Tᵣ) wie der zweite Feldeffekttransistor verbunden ist, wobei das Gate jedes dritten Feldeffekttransistors (T13, T23) mit dem Steuereingang (ST) und das Gate jedes vierten Feldeffekttransistors (T14, T24) mit einem Ausgang (QA, QB) für die zugehörigen Anschlüsse (PHA, PHB) der Kondensatoren (C1 bis C3) verbunden ist.

5. Schaltungsanordnung nach Anspruch 4, dadurch gekennzeichnet,
daß parallel zum ersten Feldeffekttransistor (T11, T21) ein fünfter Feldeffekttransistor (T15, T25) geschaltet ist, dessen Gate über einen Inverter (I) mit dem Steuereingang (ST) verbunden ist.

## Claims

1. A circuit arrangement for generating a supply dc voltage as a dc voltage which is comparatively high relative to a reference voltage and is generated by rectifying an ac voltage from an ac voltage source (Tᵣ) having two poles (A, B), comprising first switches (T11, T21) which connect each pole (A, B) directly to the reference voltage (V₀), each first switch (T11, T21) being controlled by the voltage on the respective each time other pole (B or A) of the ac voltage source, and comprising a chain of diode arrangements (T1 to T4) which are connected in series in the same direction, one end of said chain delivering the comparatively high dc voltage, the junctions of the diode arrangements being connected to a respective capacitor (C1 to C3) whose other terminals (PHA, PHB) are coupled alternately to another pole (A, B) of the ac voltage source (Tᵣ).

2. A circuit arrangement as claimed in Claim 1, characterized in that the first switch (T11, T21) is formed by a first normally-off field effect transistor of one conductivity type whose gate is connected to the corresponding pole (A or B) of the ac voltage source (Tᵣ).

3. A circuit arrangement as claimed in Claim 1, characterized in that in order to control the generating of the comparatively high voltage (V_{H}) *via* a control voltage at a control input (ST), each pole (A, B) of the ac voltage source (Tᵣ) is connected, *via* an associated second switch (T12, T22), directly to the relevant terminals (PHA, PHB) of the capacitors (C1 to C3), each second switch (T12, T22) being controlled, via a third switch (T13, T23), by the difference between the voltage at the corresponding pole (A, B) and the reference voltage (V₀), the third switches (T13, T23) being controlled by the control voltage.

4. A circuit arrangement as claimed in Claim 3, characterized in that each first and each third switch (T11, T13, T21, T23) is a first and a third field effect transistor, respectively, of one conductivity type, each second switch (T12, T22) being a second field effect transistor of the other conductivity type, the gate of each first field effect transistor (T11, T21) being connected to the corresponding pole (B, A) of the ac voltage source (Tᵣ), the gate of each second field transistor (T11, T21) being connected to the reference voltage (V₀) *via* the third field effect transistor (T13, T23) and, *via* a fourth field effect transistor (T14, T24) of the other conductivity type to the same pole (A or B) of the ac voltage source (Tᵣ) as the second field effect transistor, the gate of each third field effect transistor (T13, T23) being connected to the control input (ST) and the gate of each fourth field effect transistor (T14, T24) being connected to an output (QA, QB) for the associated terminals (PHA, PHB) of the capacitors (C1 to C3).

5. A circuit arrangement as claimed in Claim 4, characterized in that a fifth field effect transistor (T15, T25) is connected parallel to the first field effect transistor (T11, T21), its gate being connected to the control input (ST) *via* an inverter (I).

## Revendications

1. Circuit de production, à titre de tension cortinue d'alimentation, d'une tension continue supérieure à une tension de référence qui est produite par redressement d'une tension alternative à partir d'une source de tension alternative (Tᵣ) munie de deux pôles (A, B), avec des premiers commutateurs (T11, T21) qui relient chaque pôle (A, B) directement à la tension de référence (V₀), chaque premier commutateur (T11, T21) étant excité par la tension présente respectivement à l'autre pôle (B ou A) de la source de tension alternative et avec une chaîne de dispositifs à diodes montés en série au même sens (T1 à T4) dont une extrémité délivre la tension continue supérieure, les points de jonction des dispositifs à diodes étant respectivement reliés à un condensateur (C1 à C3) dont les autres bornes (PHA, PHB) sont couplées en alternance avec un autre pôle (A, B) de la source de tension alternative (Tᵣ).

2. Circuit selon la revendication 1, caractérisé en ce que chaque premier commutateur (T11, T21) est formé par un premier transistor à effet de champ autobloquant d'un type de conductivité dont la grille est reliée au pôle correspondant (A ou B) de la source de tension alternative (Tᵣ).

3. Circuit selon la revendication 1, caractérisé en ce que, pour la commande de la production de la tension supérieure (V_{H}) par l'intermédiaire d'une tension de commande à une entrée de commande (ST), chaque pôle (A, B) de la source de tension alternative (Tᵣ) est relié directement aux bornes correspondantes (PHA, PHB) des condensateurs (C1 à C3) par l'intermédiaire d'un deuxième commutateur (T12, T22) affecté, chaque deuxième commutateur (T12, T22) étant excité par l'intermédiaire d'un troisième commutateur (T13, T23) par la différence entre la tension au pôle correspondant (A, B) et la tension de référence (V₀) et les troisièmes commutateurs (T13, T23) étant excités par la tension de commande.

4. Circuit selon la revendication 3, caractérisé en ce que chaque premier et chaque troisième commutateur (T11, T13, T21, T23) es un premier ou un troisième transistor à effet de champ d'un type de conductivité et chaque deuxième commutateur (T12, T22) est un deuxième transistor à effet de champ de l'autre type de conductivité, la grille de chaque premier transistor à effet de champ (T11, T21) étant reliée au pôle correspondant (B, A) de la source de tension alternative (Tᵣ) et la grille de chaque deuxième transistor à effet de champ (T11, T21) étant reliée par l'intermédiaire d'un troisième transistor à effet de champ (T13, T23) à la tension de référence (V₀) et par l'intermédiaire d'un quatrième transistor à effet de champ (T14, T24) de l'autre type de conductivité au même pôle (A ou B) de la source de tension alternative (Tᵣ) que le deuxième transistor à effet de champ, la grille de chaque troisième transistor à effet de champ (T13, T23) étant reliée à l'entrée de commande (ST) et la grille de chaque quatrième transistor à effet de champ (T14, T24) à une sortie (QA, QB) pour les bornes correspondantes (PHA, PHB) des condensateurs (C1 à C3).

5. Circuit selon la revendication 4, caractérisé en ce que, parallèlement au premier transistor à effet de champ (T11, T21), est monté un cinquième transistor à effet de champ (T15, T25) dont la grille est reliée par l'intermédiaire d'un inverseur (I) à l'entrée de commande (ST).
